# EUROPEAN PATENT APPLICATION

(11) **EP 3 336 953 A1**
(43) Date of publication of application: **20.06.2018**
(21) Application number: 16382618.3
(22) Date of filing: 19.12.2016
(51) Int. Cl.: H01M 10/42, G01N 23/00, H01M 10/0525

(54) **A CASE FOR ENCASING AN ELECTROCHEMICAL CELL**

(71) Applicant: Fundación Centro de Investigación Cooperativa de Energías Alternativas, CIC Energigune Fundazioa, 01510 Vitoria-Gasteiz, Alava (ES)
(72) Inventor: PIERNAS-MUÑOZ, María José, E-01510 Vitoria-Gasteiz (ES); GOIKOLEA, Eider, E-01510 Vitoria-Gasteiz (ES); CASTILLO-MARTÍNEZ, Elizabeth, E-01510 Vitoria-Gasteiz (ES); BLANCO, Pablo, E-01510 Vitoria-Gasteiz (ES); ROJO, Teófilo, E-01510 Vitoria-Gasteiz (ES)
(74) Representative: ABG Patentes, S.L.

(57) **Abstract**

The present invention refers to case (500) for encasing an electrochemical cell comprising (a) a first body (100) comprising a rigid ring member (101) having an inner portion (102), an outer portion (105), a central through hole (104), and a metallic window (103) arranged on the inner portion (102) of the rigid ring member (101), (b) a second body comprising a tip member (300) having an inner portion (301) and a central thin wall (302), and a lid member (400) having a central through hole (401), wherein the tip member (300) and the lid member (400) are assembled forming a single piece or the tip member (300) and the lid member (400) are independent pieces coupled and kept jointed by at least a first fixing means, (c) a separator member (200) having a central through hole (201), the separator member (200) being arranged between the first body (100) and the second body, and configured for separating the inner portion (102) of said first body (100) and the inner portion (301) of the tip member (300) of the second body, and (d) at least a second fixing means for coupling and keeping joined the first body (100), the second body and the separator member (200). In addition, the present invention is directed to an electrochemical device comprising the case (500) as defined above and an electrochemical cell, to its use of in photon transmission geometry-based techniques and for electrochemical tests of batteries.

## Description

### FIELD OF THE INVENTION

The present invention relates to the field of electrochemistry and, more particularly, to the field of electrochemical devices.

### BACKGROUND

Energy consumption has suffered an exponential increase in the last decades and even a growing energy demand is forecasted for future years. Fossil fuels are currently the dominant source of energy powering the global economy. Nevertheless, the dependence in them has problematic consequences, as the contaminant emissions that are acidifying our oceans and creating global warming and the finite supply of these depletable sources. These facts make necessary a gradual shift towards more sustainable renewable energies, but such change requires coupling with energy storage systems to overcome their intermittency in output power. Electrochemical energy storage and specifically batteries are one of the possible tools deployed for large-scale stationary applications, as a result of its compact size, modularity and scalability. Currently, the most widespread rechargeable batteries are Li-ion batteries. Indeed, pilot plants for stationary energy storage based on Li-ion battery technology are now a reality.

The study of the reaction mechanisms occurring in electrochemical cells is of paramount importance. Therefore, the characterization of materials during the electrochemical cycling, i.e. *in-operando* measurements, is acquiring increasing importance in the field. Different types of cells have been proposed for this purpouse. First *in-situ* Mössbauer experiments were performed by Geronov et *al.* using a pot-cell with Lucite windows (Y. Geronov et al., J. Appl. Electrochem. 1975, 5, 351-358). Then, Dahn et *al.* proposed an in-situ cell based on commercial 2325 cell to study Li-ion batteries (O. Mao et al., J. Electrochem. Soc. 1998, 145, 4195-4201; R. A. Dunlap et al., Phys. Rev. B 1999, 59, 3494-3500; P. Liao et al., J. Electrochem. Soc. 2010, 157, A1080-A1084). Nowadays, the most widely used cell is derived from a Swagelok-type cell which is commonly used for electrochemical tests of Li-ion batteries (P.-E. Lippens et al., Hyperfine Interact. 2012, 206, 35-46; J. B. Leriche et al., J. Electrochem. Soc. 2010, 157, A606-A610; J.-C. Jumas et al., Hyperfine Interact. 2013, 217, 107-115; M. T. Sougrati et al., Angew. Chem. Intern. Ed. 2016, 55, 5090-5095). Both coin cell-type and Swagelok-type designs are modified versions of usually employed electrochemical cells.

However, both cell designs are not reusable and have a low gas-tight sealing. Moreover, the cells containing a plunger (Swagelok-type) present instrumental size limitations.

In view of the above, there is still the necessity of developing new electrochemical designs having more flexibility and versatility as well as improved reusability and gas-sealing efficiency.

### BRIEF DESCRIPTION OF THE INVENTION

The authors of the present invention have developed a reliable and easy-to use case suitable for encasing an electrochemical cell designed for photon transmission geometry-based techniques such as Mössbauer spectroscopy, and which allows highly reversible electrochemical cycling.

Therefore, in a first aspect, the invention is directed to a case (500) for encasing an electrochemical cell comprising:
a) a first body (100) comprising,
   - a rigid ring member (101) having an inner portion (102) and an outer portion (105), and a central through hole (104), and
   - a metallic window (103) arranged on the inner portion (102) of the rigid ring member (101),
b) a second body comprising,
   - a tip member (300) having an inner portion (301) and a central thin wall (302), and
   - a lid member (400) having a central through hole (401),
   wherein the tip member (300) and the lid member (400) are assembled forming a single piece or the tip member (300) and the lid member (400) are independent pieces coupled and kept jointed by at least a first fixing means,
c) a separator member (200) having a central through hole (201), the separator member (200) being arranged between the first body (100) and the second body, and configured for separating the inner portion (102) of said first body (100) and the inner portion (301) of the second body, and
d) at least a second fixing means for coupling and keeping joined the first body (100), the second body assembly and the separator member (200).

A second aspect of the present invention refers to an electrochemical device comprising the case (500) as defined above and an electrochemical cell.

The electrochemical device as defined above allows achieving an electrochemical performance comparable to that measured in standard Swagelok or coin cells. Moreover, the case (500) that encases an electrochemical cell enables the pass of γ-rays free from any additional iron component or heavy components that absorbed and thus reduces the total intensity of γ-rays that reach the detector.

A third aspect of the present invention refers to the use of the electrochemical device as defined above in photon transmission geometry-based techniques.

A fourth aspect of the present invention refers to the use of the electrochemical device as defined above for electrochemical tests of sodium or lithium batteries.

### FIGURES

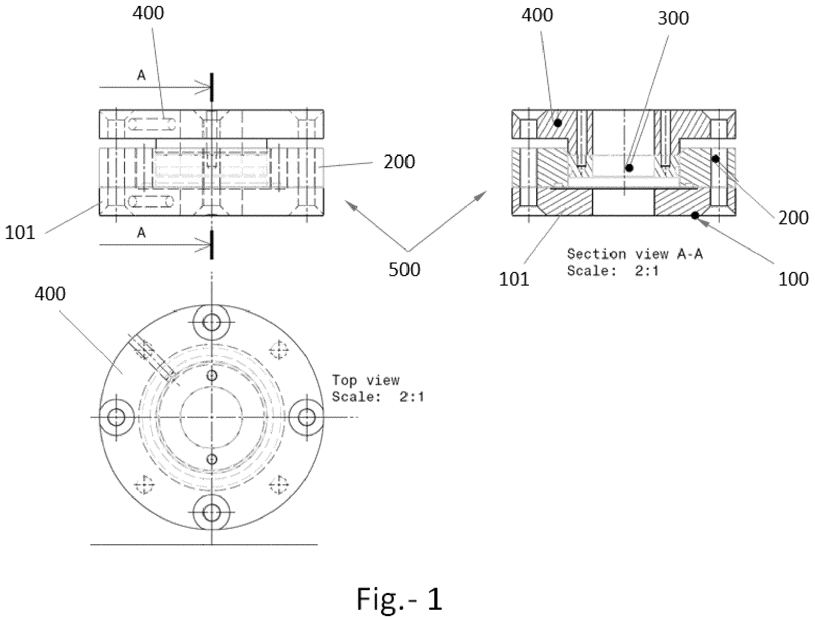

**Figure 1****:** This figure shows a front view, a top view and a cross section view of the case of the invention.

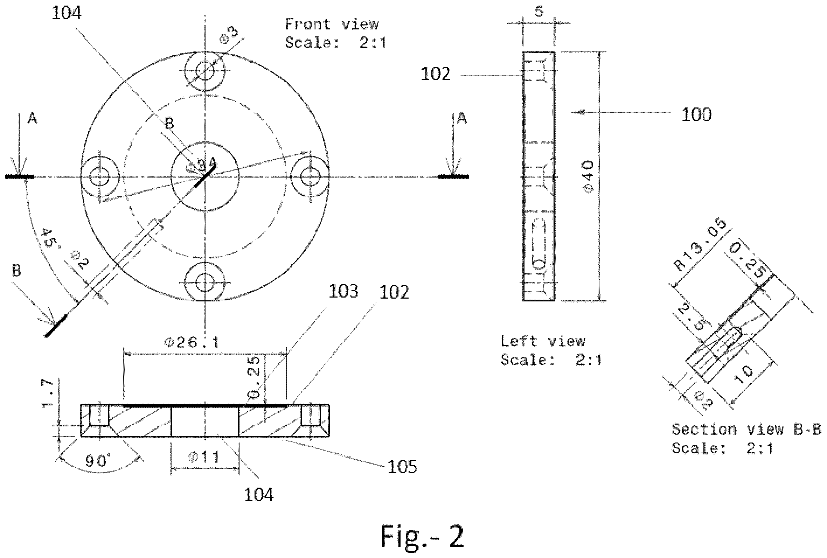

**Figure 2****:** This figure shows a front view, a left view and cross section views of the first body or base of the case of invention.

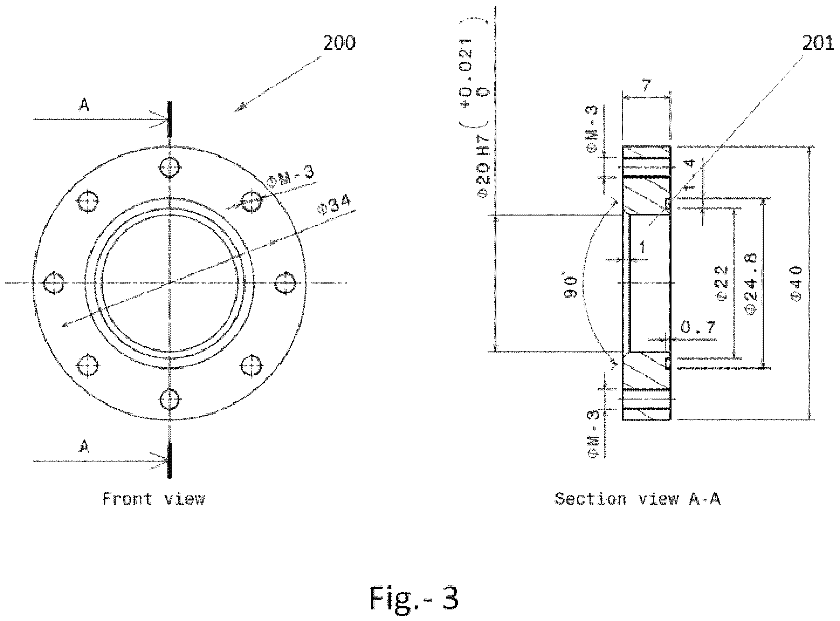

**Figure 3****:** This figure shows a front view and a cross section view of the separator member of the case of the invention.

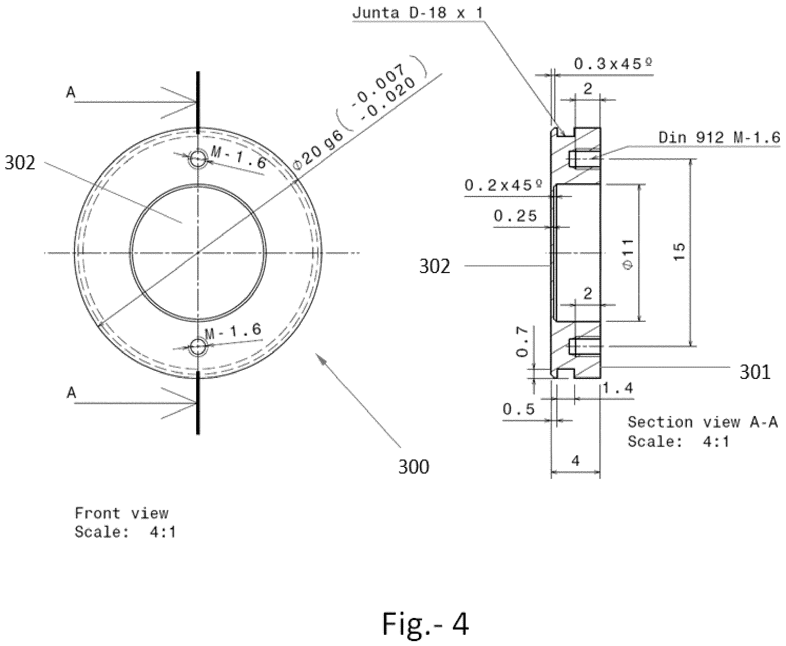

**Figure 4****:** This figure shows a front view and a cross section view of the tip member of the case of the invention.

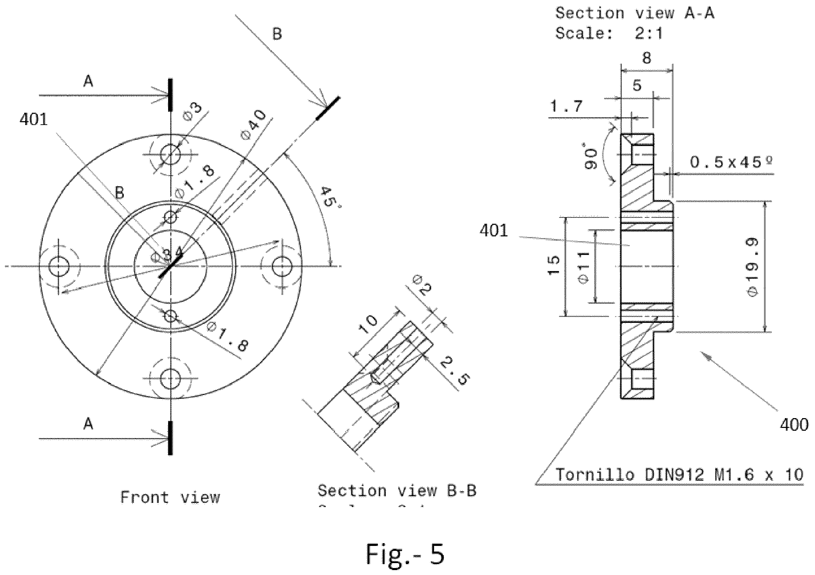

**Figure 5****:** This figure shows a front view and a cross section view of the lid member of the case of the invention.

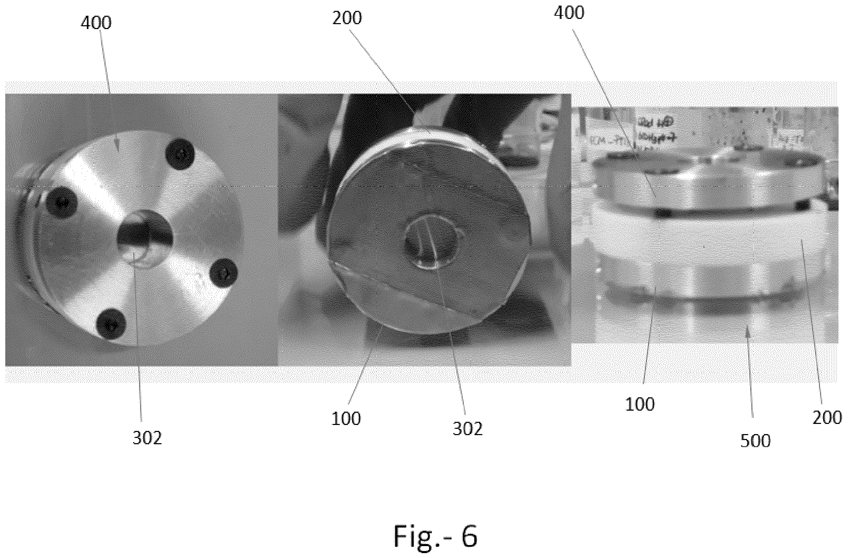

**Figure 6****:** This figure shows different views of the case of the invention.
**Figure 7****:** Electrochemical performance of K-PB against Li⁺/Li at the anodic range from 5 mV to 1.6 V when cycled using the electrochemical device of the invention. 1M LiPF₆ was the electrolyte deployed.
**Figure 8****:** Mössbauer spectra obtained at different points of the electrochemical curve of K-PB vs. Li+/Li, along the discharge, when using the electrochemical device of the invention. Experimental and fitting are shown along with the solid lines that represent the LS Fe^{II}, HS Fe³⁺, HS Fe²⁺, Fe⁰ and Fe⁰? spectral components, respectively.
**Figure 9****:** Mössbauer spectra obtained at different points of the electrochemical curve of K-PB vs. Li⁺/Li, along the charge, when using the electrochemical device of the invention. Experimental and fitting are shown along with the solid lines that represent the LS Fe^{II}, Fe⁰ and tentatively Fe⁰ (Fe⁰?) spectral components, respectively.
**Figure 10****:** Fe components and the evolution of their oxidation states along the cycling process.

### DETAILED DESCRIPTION OF THE INVENTION

Unless defined otherwise, all technical and scientific terms used herein have the same meaning as commonly understood to one of ordinary skill in the art to which this disclosure belongs.

As defined above, in a first aspect, the present invention refers to a case (500) for encasing an electrochemical cell comprising:
a) a first body (100) comprising,
   - a rigid ring member (101) having an inner portion (102) and an outer portion (105), and a central through hole (104), and
   - a metallic window (103) arranged on the inner portion (102) of the rigid ring member (101),
b) a second body comprising,
   - a tip member (300) having an inner portion (301) and a central thin wall (302), and
   - a lid member (400) having a central through hole (401),
   wherein the tip member (300) and the lid member (400) are assembled forming a single piece or the tip member (300) and the lid member (400) are independent pieces coupled and kept jointed by at least a first fixing means,
c) a separator member (200) having a central through hole (201), the separator member (200) being arranged between the first body (100) and the second body, and configured for separating the inner portion (102) of said first body (100) and the inner portion (301) of the tip member (300) of the second body, and
d) at least a second fixing means for coupling and keeping joined the first body (100), the second body and the separator member (200).

Therefore, the case (500) of the present invention as defined above firstly comprises a first body (100) comprising a rigid ring member (101) having an inner portion (102) and an outer portion (105), and a central through hole (104), and a metallic window (103) arranged on the inner portion (102) of the rigid ring member (101).

In a preferred embodiment, the rigid ring member (101) is made of an electrical conductor, such as aluminum or stainless steel.

In a preferred embodiment, the metallic window (103) is made of beryllium.

The case (500) of the present invention as defined above further comprises a second body comprising a tip member (300) having an inner portion (301) and a central thin wall (302), and a lid member (400) having a central through hole (401), wherein the tip member (300) and the lid member (400) are assembled forming a single piece or the tip member (300) and the lid member (400) are independent pieces coupled and kept jointed by at least a first fixing means.

This second body is essential for the proper adjustment of the mechanical pressure within the case (500). In addition, contrary to the standard electrochemical cell designs containing a plunger, the case (500) for an electrochemical cell of the present invention allows more flexibility when there are instrumental size limitations, i.e. the distance between the source and the detector. This is due to the fact that in the case (500) of the present invention, the second body allows decreasing the overall longitudinal size of the electrochemical cell substantially.

In a preferred embodiment, the tip member (300) is made of an electrical conductor, such as aluminum or stainless steel.

In another preferred embodiment, the lid member (400) is also made of an electrical conductor, such as aluminum or stainless steel.

In yet another preferred embodiment, the tip member (300) and the lid member (400) are independent pieces coupled and kept jointed by at least a first fixing means. This configuration allows to exchange just the tip member (300) depending of the chemistry of the electrochemical cell to be encased.

In a particular embodiment, the at least first fixing means is made of an electrical conductor, such as aluminum or stainless steel.

The case (500) of the present invention further comprises a separator member (200) having a central through hole (201), the separator member (200) being arranged between the first body (100) and the second body, and configured for separating the inner portion (102) of said first body (100) and the inner portion (301) of the tip member (300) of the second body.

The separator member (200) avoids short circuits between the first body (100) and the rest of the components of the case (500), i.e. the second body.

Thus, in a particular embodiment, the separator member (200) as defined above is made of an electrical insulator material, such as polytetrafluoroethylene (PTFE).

Finally, the case (500) of the present invention further comprises at least a second fixing means for coupling and keeping joined the first body (100), the second body and the separator member (200).

In a preferred embodiment, the second fixing means is made of an electrical conductor, such as aluminum or stainless steel.

In another aspect, the present invention refers to an electrochemical device comprising the case (500) as defined above and an electrochemical cell.

In a particular embodiment, the present invention refers to an electrochemical device comprising the case (500) as defined above and an electrochemical cell, wherein the electrochemical cell comprises a first electrode, a second electrode and an electrolyte.

More particularly, the electrode device comprises a first electrode, a second electrode and an electrolyte located inside the separator (200) of the case (500) of the invention.

In a particular embodiment, the first electrode comprises a Mössbauer active element such as the ⁵⁷Fe isotope.

The second electrode could be a positive, negative or counter/reference electrode.

Thus, in another particular embodiment, the present invention refers to an electrochemical device as defined above comprising potassium Prussian Blue (K-PB, having chemical formula K₁₋ₓFe_{1+(x/3)}[Fe(CN)₆] ·yH₂O) as a first electrode and a Li⁺/Li-ion electrode as the second electrode.

In another preferred embodiment, the electrolyte is a solid electrolyte or a liquid electrolyte impregnated in a solid separator (such as glass fibers).

A third aspect of the invention is directed to the use of the electrochemical device as defined above in photon transmission geometry-based techniques.

In the context of the present invention, the term "transmission geometry-based techniques" refers to spectroscopic techniques wherein the incoming beam is orthogonal to the sample to be measured.

In a preferred embodiment, the photon transmission geometry-based technique as defined above is Mössbauer spectroscopy, more preferably *in-situ* Mössbauer spectroscopy.

In the context of the present invention, the term "Mössbauer spectroscopy" refers to a spectroscopic technique based on the Mössbauer effect, which consists of the recoil-free, resonant absorption and emission of gamma rays in solids. The Mössbauer effect is only detected in a limited number of isotopes.

Therefore, in a particular embodiment, present invention refers to the use of the electrochemical device as defined above in ⁵⁷Fe Mössbauer spectroscopy.

The *in-situ* Mössbauer spectroscopy is widely use to study the reaction mechanisms occurring in electrochemical cells.

Thus, a final aspect of the present invention refers to the use of the electrochemical device as defined above for electrochemical tests of batteries, in particular sodium or lithium baterries.

### EXAMPLE

### In-situ ⁵⁷Fe Mössbauer measurements using the electrochemical cell of the present invention

Potassium Prussian Blue (abbreviated as K-PB), having chemical formula K₁₋ₓFe_{1+(x/3)}[Fe(CN)₆] · yH₂O, was investigated as anode material vs. Li⁺/Li, in the cut-off voltage of 5 mV - 1.6 V by galvanostatic cycling. To determine unequivocally whether Fe⁰ nanoparticles were generated during the electrochemical reduction, *in-situ* Mössbauer measurements were performed using the previously described electrochemical device comprising the case (500) of the invention. The connections of the case (500) with a potentiostat (a VMP3 potentiostat) were made through a hole on the sides of the first and second bodies. A home-made Mössbauer equipment was used to collect the spectra. A velocity range from -4.5 to 4.5 mm·s⁻¹ was utilized.

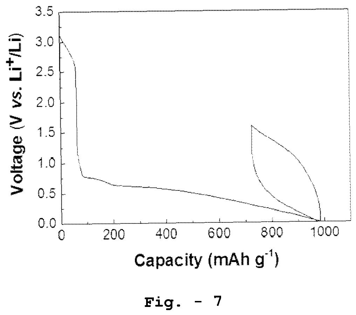

*In-situ* Mössbauer spectra were continuously acquired all along the different electrochemical cycling stages. As **Figure 7** illustrates, the electrochemical performance is comparable to that obtained using coin cells.

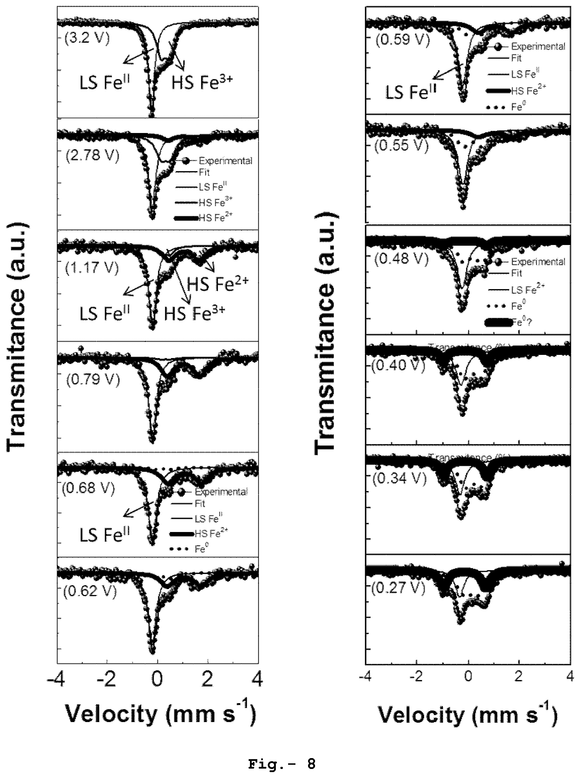

Mössbauer spectra collected along the first discharge are displayed in **Figure 8****.** The spectrum of the initial material (3.2 V) can be fitted using two main components: a singlet typical for a low spin LS Fe^{II} covalently linked to C and a doublet assigned to a high spin HS Fe³⁺ ionically bonded to N. Below 2.78 V, a third component, attributed to the formation of HS Fe²⁺ as a consequence of the reduction of Fe(³⁺) ionic, appears as a doublet. As it can be observed in the reduction from 2.78 V to 0.79 V, the population of the new HS Fe²⁺ increases as long as the HS Fe³⁺ is consumed. Indeed, at 0.79 V, the K-PB has completely evolved into Potassium Prussian Blue (K-PW) and almost no trace of the initial Fe³⁺ is appreciated. From 0.68 V downwards, a new doublet component can be defined. According to some papers reported in the literature, the hyperfine parameters of this doublet can be ascribed to the formation of paramagnetic Fe⁰ nanoparticles, usually observed at the end of the lithiation of conversion materials. It is clear anyway that the proportion of Fe⁰ augments when the voltage is reduced from 0.62 to 0.55 V at the expense of the depletion of the HS Fe2+ while the covalent LS Fe²⁺ of Fe(CN)₆ units likely remains intact. Finally, at 0.48 V, almost no HS Fe²⁺ remains. At this point of the electrochemical curve, an additional doublet makes an appearance. The formation of this new type of iron is subject to the consumption of the LS Fe²⁺, which was invariant/intact until then. The parameters of the new iron generated, could not be matched to any known iron and it is tentatively assigned to the formation of Fe⁰ with different structural environment to that precedent from the HS Fe²⁺.

The hyperfine parameters of the different irons formed and its variation along the reduction are collected in the following table.

**Table 1. Hyperfine parameters δ, Δ and WID extracted from the Mössbauer fitting for ⁵⁷Fe in K-PB along the discharge curve (δ = isomer shift relative to Fe bcc, Δ = quadrupolar splitting, WID = width at half hight).**

| **Voltage*** | **Assignation** | **Isomer Shift, δ** (mm·s⁻¹) | **Quadrupolar, Δ** (mm·s⁻¹) | **WID**(mm·s⁻¹ ) |
|---|---|---|---|---|
| 0.5 V | LS Fe (²⁺) | - 0.12 (2) | 0 | 0.43 (4) |
| 0.76 V | HS Fe (³⁺) | 0.42 (2) | 0.36 (3) | - |
| 0.68 V | HS Fe (²⁺) | 1.14 (2) | 1.27 (7) | 0.66 (6) |
| - | Fe (⁰) | 0.27 (3) | 0.64 (6) | 0.56 (9) |
| - | Fe (⁰) ? | 0.24 (2) | 1.68 (4) | 0.28 (2) |

| | | | | |
|---|---|---|---|---|
| *voltage down to what this type of iron is stable. | | | | |

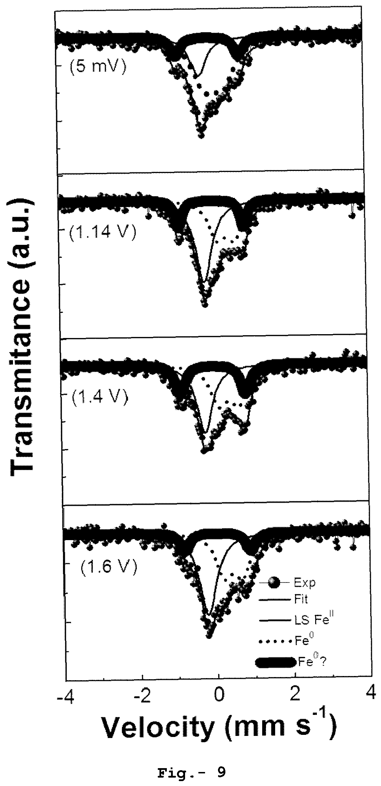

During the charge, the process is somehow reversed although it follows a different path (see **Figure 9**). From the totally discharged state (5 mV) to 1.14 V, the proportion of LS Fe^{II} augments considerably at the expense of the Fe⁰ consumption, while the iron tentatively assigned to Fe⁰ remains invariable. In the 1.14 - 1.4 V vs. Li⁺/Li range, the population of LS Fe²⁺ decreases ca. 10% resulting in an increase of 7% of Fe⁰ and a slight increase of 3% of Fe⁰. Finally, from 1.4 to 1.6 V, there is a gain in the LS Fe^{II} proportion, precedent from the diminishing of Fe⁰. In this occasion, Fe⁰ suffers almost no variation. In overall summary, it can be concluded that along the charge, the population related to LS Fe^{II} augments while that belonging to Fe⁰ decreases. However, the augment of the population of Fe⁰ followed by its reduction at intermediate points of the oxidation curve (between 1.14 and 1.6 V), manifests a competitiveness between the formation of LS Fe^{II} upon oxidation and maybe some disproportionation of the iron tentatively assigned to Fe⁰.

The hyperfine parameters of the different irons formed and its variation during the oxidation are collected in the following table.

**Table 2. Hyperfine parameters δ, Δ and WID extracted from the Mössbauer fitting for 57Fe in K-PB along the discharge curve (δ = isomer shift relative to Fe bcc, Δ = quadrupolar splitting, WID = width at half hight).**

| **Voltage (V)** | **Assignation** | **Isomer Shift, δ** (mm·s⁻¹) | **Quadrupolar, Δ** (mm·s⁻¹) | **WID** (mm·s^{- 1}) | **Area** (%) |
|---|---|---|---|---|---|
| 5 mV | LS Fe (²⁺) | -0.15 (4) | 0 | 0.53(3 ) | 21.6% |
| | Fe (0) | 0.20 | 0.51 | 0.70 | 65.3% |
| | Fe (0) ? | 0.04 | 1.66 | 0.30 | 13% |
| 1.14 V | LS Fe (²⁺) | - 0.12 | 0 | 0.52 | 47.2% |
| | Fe (0) | 0.46 | 0.46 | 0.52 | 38.9% |
| | Fe (0) ? | 0.09 | 1.71 | 0.24 | 13.8% |
| 1.4 V | LS Fe (²⁺) | -0.15 | 0 | 0.50 | 37.2% |
| | Fe (0) | 0.48 | 0.53 | 0.55 | 42.6 % |
| | Fe (0) ? | 0.07 | 1.71 | 0.31 | 20.2% |
| 1.6 V | LS Fe (²⁺) | -0.13 | 0 | 0.56 | 47.0% |
| | Fe (0) | 0.54 | 0.49 | 0.51 | 41.9% |
| | Fe (0) ? | 0.14 | 1.73 | 0.29 | 11.1% |

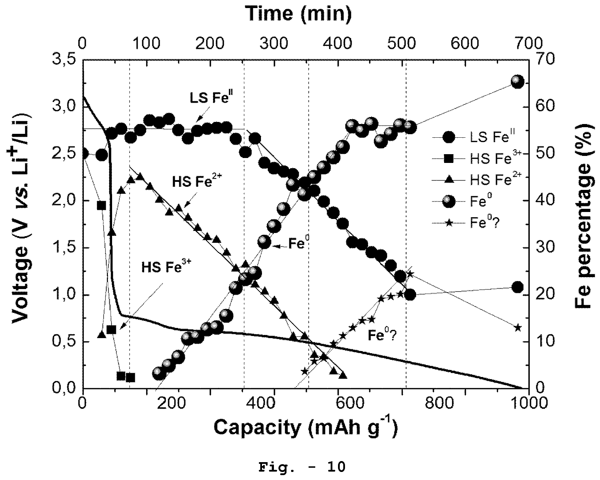

The evolution of the Fe components along the first discharge and charge, are presented in **Figure 10****.** If not the totality of the mechanism occurring along the discharge was unveiled, since other supplemental techniques are required for that, the formation of Fe⁰ nanoparticles was unequivocally confirmed by the in-situ Mössbauer experiments.

## Claims

1. A case (500) for encasing an electrochemical cell comprising:
a) a first body (100) comprising,
- a rigid ring member (101) having an inner portion (102) and an outer portion (105), and a central through hole (104), and
- a metallic window (103) arranged on the inner portion (102) of the rigid ring member (101),
b) a second body comprising,
- a tip member (300) having an inner portion (301) and a central thin wall (302), and
- a lid member (400) having a central through hole (401), wherein the tip member (300) and the lid member (400) are assembled forming a single piece or the tip member (300) and the lid member (400) are independent pieces coupled and kept jointed by at least a first fixing means,
c) a separator member (200) having a central through hole (201), the separator member (200) being arranged between the first body (100) and the second body, and configured for separating the inner portion (102) of said first body (100) and the inner portion (301) of the tip member (300) of the second body, and
d) at least a second fixing means for coupling and keeping joined the first body (100), the second body and the separator member (200).

2. The case (500) according to claim 1 wherein the first body (100) is made of an electrical conductor.

3. The case (500) according to any of claims 1 to 2 wherein the metallic window (103) is made of beryllium.

4. The case (500) according to any of claims 1 to 3 wherein the the tip member (300) is made of an electrical conductor.

5. The case (500) according to any of claims 1 to 4 wherein the the lid member (400) is made of an electrical conductor.

6. The case (500) according to any of claims 1 to 5 wherein the tip member (300) and the lid member (400) are independent pieces coupled and kept jointed by at least a first fixing means.

7. The case (500) according to any of claims 1 to 6 wherein the separator member (200) is made of an electrical insulator material.

8. An electrochemical device comprising the case (500) according to any of claims 1 and 7 and an electrochemical cell.

9. The electrochemical device according to any of claim 8, further comprising a first electrode, a second electrode and an electrolyte located inside the separator (200) of the case (500).

10. The electrochemical device according to claim 9, wherein the first electrode comprises a Mössbauer active element.

11. The electrochemical device according to claim 10, wherein the first electrode comprises the ⁵⁷Fe isotope.

12. Use of the electrochemical device according to any of claims 8 to 11 in photon transmission geometry-based techniques.

13. Use of the electrochemical device according to claim 11 in Mössbauer spectroscopy.

14. Use of the electrochemical device according to claim 13 in ⁵⁷Fe Mössbauer spectroscopy.

15. Use of the electrochemical device according to any of claims 8 to 11 for electrochemical tests of batteries.
